# EUROPEAN PATENT APPLICATION

(11) **EP 3 306 286 A1**
(43) Date of publication of application: **11.04.2018**
(21) Application number: 16802815.7
(22) Date of filing: 01.06.2016
(51) Int. Cl.: G01H 11/08, G01M 99/00

(54) **BRIDGE ABNORMALITY SENSING DEVICE**

(30) Priority: 02.06.2015 JP 2015112359
(71) Applicant: Panasonic Intellectual Property Management Co., Ltd., Osaka-shi, Osaka 540-6207 (JP); East Japan Railway Company, Tokyo 151-8578 (JP)
(72) Inventor: KATSUMURA, Hidenori, Osaka-shi, Osaka 540-6207 (JP); KAGATA, Hiroshi, Osaka-shi, Osaka 540-6207 (JP); OKUMURA, Hidenori, Osaka-shi, Osaka 540-6207 (JP); KONISHI, Toshihiro, Osaka-shi, Osaka 540-6207 (JP); KURIBAYASHI, Kenichi, Tokyo 151-8578 (JP); IZUMI, Daisuke, Tokyo 151-8578 (JP)
(74) Representative: Vigand, Philippe
(86) International application number: PCT/JP2016/002660
(87) International publication number: WO 2016/194375

(57) **Abstract**

Disclosed herein is a bridge abnormality sensing device including: a pair of vibration sensors 151 installed in an upper structure 110 of a railroad bridge supported with a plurality of bearings 121, the pair of vibration sensors 151 being provided for two of the bearings 121 arranged in a width direction; a detector circuit 181 configured to output a damage detection signal based on a difference between output signals of the pair of vibration sensors 151; and an output circuit configured to receive the damage detection signal and notify an external device of any structural damage detected from the railroad bridge. The vibration sensors 151 are vibration power generators that generate power in a frequency range of abnormal vibration resulting from the damage. Power to drive the detector circuit 181 is supplied from the vibration power generators.

## Description

### TECHNICAL FIELD

The present disclosure relates to a bridge abnormality sensing device, bridge damage detection method, and bridge health monitoring system for monitoring the structural health of a railroad bridge to detect any structural damage thereof.

### BACKGROUND ART

In general, a railroad bridge supports its upper structure such as bridge beams with at least four bearings provided on bridge abutments. The railroad bridge is designed to allow the upper structure to be evenly supported by the respective bearings when completed. However, occurrence of land subsidence or any other land deformation would make the loads applied to the respective bearings uneven, and eventually create a gap between some of those bearings and the upper structure, since the bearings are not fixed to the upper structure. Creation of a gap between those bearings and the upper structure would cause the upper structure to rattle and generate abnormal vibrations while a train is passing through the bridge. The abnormal vibrations would not only make noise but also ultimately lead to the collapse of the bridge as well.

However, scheduled visit and periodic inspection to detect any structural damage done to a bridge require extensive labor. Thus, a technique for monitoring the structural health of a bridge to detect any structural damage thereof using a sensor or any other sensing element has been proposed (see, for example, Patent Document 1).

### CITATION LIST

### PATENT DOCUMENTS

PATENT DOCUMENT 1: Japanese Unexamined Patent Publication No. H7-128182

### SUMMARY OF THE INVENTION

### TECHNICAL PROBLEM

Nevertheless, attempting to monitor the bridge health with a sensor installed near a bearing would raise the following problems. Bearings are often provided at sites that are not easily accessible, which makes it difficult to replace the batteries of a sensor installed near such a bearing. Thus, periodic battery replacement would require almost as large the number of man-hours as the monitoring by humans. On the other hand, it would entail a huge cost to provide power cables for supplying power to the sensor.

It is therefore an object of the present disclosure to provide a bridge abnormality sensing device with the ability to monitor the structural health of a given bridge to detect any abnormal vibrations thereof without providing batteries or power cables.

### SOLUTION TO THE PROBLEM

A first implementation of a bridge abnormality sensing device according to the present disclosure includes: a pair of vibration sensors installed in an upper structure of a railroad bridge supported with a plurality of bearings, the pair of vibration sensors being provided for two of the bearings arranged in a width direction; a detector circuit configured to output a damage detection signal based on a difference between output signals of the pair of vibration sensors; and an output circuit configured to receive the damage detection signal and notify an external device of any structural damage detected from the railroad bridge. The vibration sensors are vibration power generators that generate power in a frequency range of abnormal vibration resulting from the damage. Power to drive the detector circuit is supplied from the vibration power generators.

In the first implementation of the bridge abnormality sensing device, the detector circuit may include a first capacitor and a second capacitor to be charged with outputs of the vibration sensors, and an arithmetic circuit configured to calculate a difference between the output signals, the first capacitor may store power to drive the arithmetic circuit, and the second capacitor may generate an input signal to be supplied to the arithmetic circuit.

A second implementation of a bridge abnormality sensing device includes: a pair of vibration sensors installed in an upper structure of a railroad bridge supported with a plurality of bearings, the pair of vibration sensors being provided for two of the bearings arranged in a width direction; a detector circuit configured to output a damage detection signal based on a difference between output signals of the pair of vibration sensors; an output circuit configured to receive the damage detection signal and notify an external device of any structural damage detected from the railroad bridge; and a power-supplying vibration power generator installed in the upper structure of the railroad bridge and configured to supply power to drive the detector circuit. The vibration sensors are vibration power generators that generate power in a frequency range of abnormal vibration resulting from the damage.

In the first and second implementations of the bridge abnormality sensing device, each vibration power generator may include: a first vibration system including a leaf spring forming an integral part of a piezoelectric element and a first mass member attached to the leaf spring; and a second vibration system including a second mass member, to which the first vibration system is attached, and an elastic member provided between the second mass member and the upper structure, and a resonant frequency of the first vibration system and a resonant frequency of the second vibration system may fall within a frequency range of the abnormal vibration.

In the first and second implementations of the bridge abnormality sensing device, the detector circuit may store the difference between the output signals with time, and may output the damage detection signal when a change with time in the difference between the output signals exceeds a predetermined rate of change.

In the first and second implementations of the bridge abnormality sensing device, the detector circuit and the output circuit may be wirelessly connected to each other.

In the first and second implementations of the bridge abnormality sensing device, the output circuit may include a light-emitting device arranged at such a position where an image of the light-emitting device is able to be captured by a camera mounted on a running train and configured to emit light in response to the damage detection signal.

In the first and second implementations of the bridge abnormality sensing device, the output circuit may include a wireless communications circuit.

An implementation of a bridge health monitoring system includes: a bridge abnormality sensing device configured to detect any structural damage done to a railroad bridge; and a surveillance device mounted on a train to run through the railroad bridge and configured to monitor behavior of the bridge abnormality sensing device. The bridge abnormality sensing device includes: a pair of vibration sensors installed in an upper structure of the railroad bridge supported with a plurality of bearings, the pair of vibration sensors being provided for two of the bearings arranged in a width direction; a detector circuit configured to output a damage detection signal based on a difference between output signals of the pair of vibration sensors; and an output circuit configured to receive the damage detection signal and notify an external device of the damage. The vibration sensors are vibration power generators that generate power in a frequency range of abnormal vibration resulting from the damage, and power to drive the detector circuit is supplied from the vibration power generators.

In that implementation of the bridge health monitoring system, the output circuit may make the light-emitting device emit light in the event of the damage detected, and the surveillance device may be a camera mounted on the train to see whether or not the light-emitting device is emitting light.

A first implementation of a bridge damage detection method includes calculating a difference between outputs of a pair of vibration sensors installed in an upper structure of a railroad bridge supported with a plurality of bearings, the pair of vibration sensors being provided for two of the bearings arranged in a width direction; and determining, based on the magnitude of the difference, whether or not any structural damage has been done.

A second implementation of a bridge damage detection method includes calculating a change with time in a difference between outputs of a pair of vibration sensors installed in an upper structure of a railroad bridge supported with a plurality of bearings, the pair of vibration sensors being provided for two of the bearings arranged in a width direction; and determining, based on a value of the change with time, whether or not any structural damage has been done.

### ADVANTAGES OF THE INVENTION

A bridge abnormality sensing device according to the present disclosure can detect abnormal vibration of a bridge without using batteries or power cables.

### BRIEF DESCRIPTION OF THE DRAWINGS

[FIG. 1] FIG. 1 illustrates how a bridge abnormality sensing device may be installed in an exemplary embodiment.
[FIG. 2A] FIG. 2A is a graph showing a frequency distribution of vibrations generated near a normal bearing.
[FIG. 2B] FIG. 2B is a graph showing a frequency distribution of vibrations generated near a bearing with a gap.
[FIG. 2C] FIG. 2C shows their difference, that is, the result of subtraction of the spectrum of FIG. 2A from the spectrum of FIG. 2B.
[FIG. 3] FIG. 3 illustrates an exemplary vibration sensor for use in a bridge abnormality sensing device.
[FIG. 4] FIG. 4 illustrates another exemplary vibration sensor for use in a bridge abnormality sensing device.
[FIG. 5A] FIG. 5A is a graph showing an exemplary output of a vibration sensor arranged near a normal bearing.
[FIG. 5B] FIG. 5B is a graph showing an exemplary output of a vibration sensor arranged near a bearing with a gap.
[FIG. 5C] FIG. 5C shows their difference, that is, the result of subtraction of the spectrum of FIG. 5A from the spectrum of FIG. 5B.
[FIG. 6] FIG. 6 is a block diagram illustrating an exemplary detector circuit.
[FIG. 7] FIG. 7 illustrates an exemplary bridge health monitoring system.
[FIG. 8] FIG. 8 is a block diagram illustrating a variation of a bridge abnormality sensing device.

### DESCRIPTION OF EMBODIMENTS

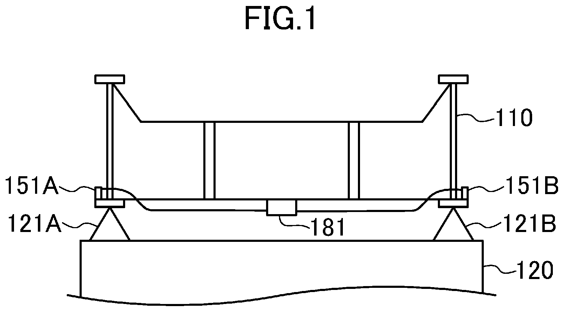

As shown in FIG. 1, a bridge abnormality sensing device according to an exemplary embodiment includes: a pair of vibration sensors 151 (151A, 151B) installed in an upper structure 110 of a railroad bridge; and a detector circuit 181 configured to receive respective outputs of these two vibration sensors 151A and 151B and notify an external device of any structural damage detected from the railroad bridge depending on the difference between the input values.

The upper structure 110 is supported by bearings 121 provided on bridge abutments 120. The pair of vibration sensors 151A, 151B are respectively provided for two bearings 121 (121A, 121B) arranged in a width direction. That is to say, the vibration sensor 151A is arranged at such a position where the sensor 151A is more strongly susceptible to the impact of abnormal vibration resulting from the structural damage done to the bearing 121A than the vibration sensor 151B is. On the other hand, the vibration sensor 151B is arranged at such a position where the sensor 151B is more strongly susceptible to the impact of abnormal vibration resulting from the structural damage done to the bearing 121B than the vibration sensor 151A is.

Specifically, the vibration sensor 151A is arranged closer to the bearing 121A than the vibration sensor 151B is. The vibration sensor 151B is arranged closer to the bearing 121B than the vibration sensor 151A is. Also, it is recommended that the vibration sensors 151A and 151B be arranged symmetrically to each other with respect to the axis of symmetry of the bearings 121A and 121B. Such a configuration allows almost equal loads to be applied to the bearings 121A and 121B, and allows the vibration sensors 151A and 151B to output almost the same values while no abnormal vibration is being generated. Nevertheless, the vibration sensors 151A and 151B do not always have to be arranged symmetrically with respect to the axis of symmetry of the bearings 121A and 121B, provided that the outputs are corrected, for example. Also, when the arrangement positions of the vibration sensors 151A and 151B are determined, the impact on the overall structure of the railroad bridge may be taken into consideration.

The vibration sensors 151 are vibration power generators that generate power in a frequency range of abnormal vibration resulting from any structural damage done to the railroad bridge. As used herein, the "abnormal vibration" resulting from the structural damage done to the railroad bridge refers to vibration resulting from rattling that occurs when a land subsidence or any other land deformation disturbs the balance of the loads applied from the upper structure 110 to the respective bearings 121.

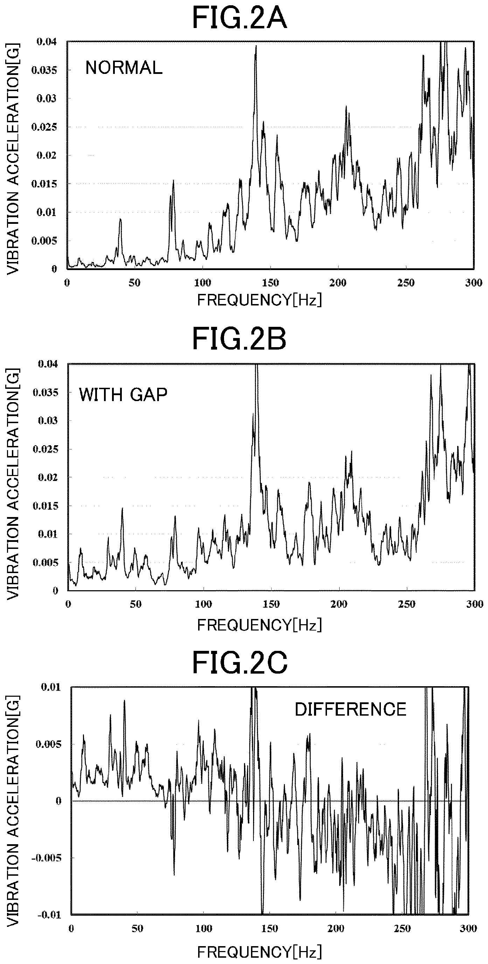

The frequency range of such abnormal vibration varies depending on the bridge pier structure, and the weight, speed or any other factor of the train to run through the bridge. The frequency is ordinarily 200 Hz or less, mostly 150 Hz or less, and typically 120 Hz or less. FIGS. 2A-2C show the results of measurement of the vibrations generated while a train was passing through a bridge. FIG. 2A shows the vibrations generated near a normal bearing, FIG. 2B shows the vibrations generated near a bearing with a gap, and FIG. 2C shows their difference, i.e., the result of subtraction of the spectrum shown in FIG. 2A from the spectrum shown in FIG. 2B. The train was running at a speed of approximately 70 kilometers per hour. The vibration acceleration was measured with an acceleration sensor. When an ordinary vibration of more than 200 Hz was generated by the passage of the train, no distinct difference could be recognized between the vibration acceleration measured near the bearing with a gap as shown in FIG. 2B and the vibration acceleration measured near the normal bearing as shown in FIG. 2A. As a result, their difference shown in FIG. 2C randomly varied and shifted between positive and negative values. On the other hand, when a vibration of 200 Hz or less was generated, their difference was significantly biased toward the positive domain as shown in FIG. 2C, and a vibration with greater amplitude was generated near the bearing with a gap than near the normal bearing.

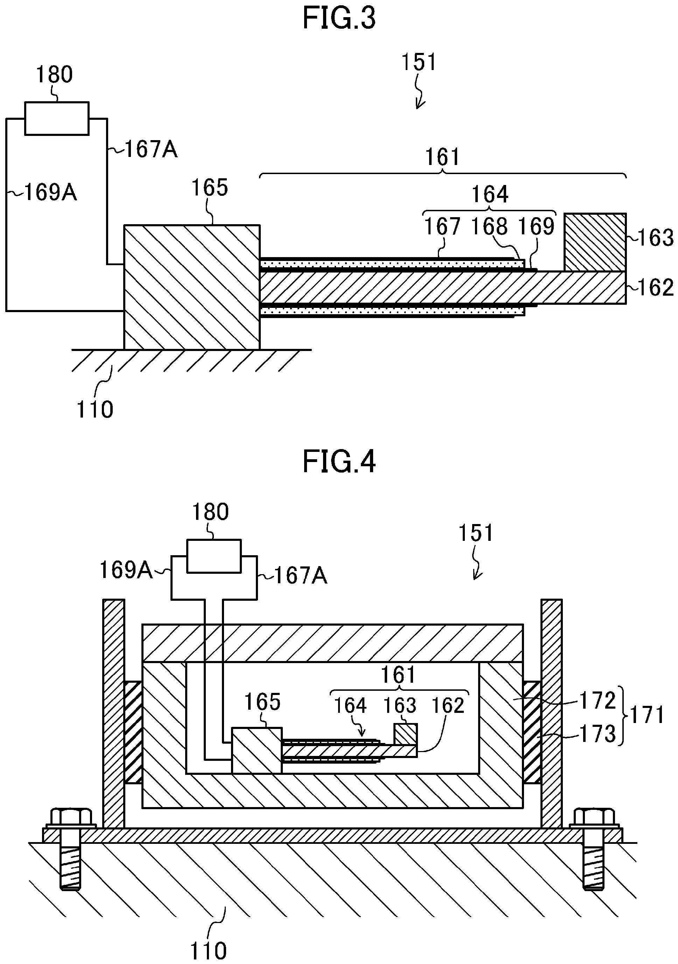

The vibration sensors 151 may have a structure such as the one shown in FIG. 3, for example. Specifically, the vibration sensors 151 may be each implemented as a vibration power generator with a cantilever structure. Such a vibration power generator includes: a leaf spring 162, one end of which is fixed to a fixing member 165 and the other end of which has a mass member 163 fixed thereon; and a pair of piezoelectric elements 164 fixed to the leaf spring 162. Adjustment is made on the mass and other parameters of the mass member 163 to allow the resonant frequency of a vibration system 161, comprised of the mass member 163 and the leaf spring 162, to fall within the frequency range of the abnormal vibration. Once the fixing member 165 has been fixed to the upper structure 110, the vibration of the upper structure 110 causes the piezoelectric elements 164 of the leaf spring 162 to be deformed, thus generating a voltage representing the magnitude of the deformation of the piezoelectric elements 164.

Each of the piezoelectric elements 164 may include, for example, a piezoelectric layer 168 and an upper electrode 167 and a lower electrode 169 which are respectively provided on the upper and lower surfaces of the piezoelectric layer 168. Connecting a cable to each of the upper and lower electrodes 167 and 169 allows the voltage generated in the piezoelectric layer 168 to be extracted. In FIG. 3, a load 180 is connected to the vibration sensor 151 via a cable 167A connected to the upper electrode 167 and a cable 169A connected to the lower electrode 169. The load 180 includes a resistor, a capacitor, and a rectifier circuit, for example. The piezoelectric layer 168 may be configured as a film of a ceramic material or a single crystalline material, for example. Examples of materials for the film include lead zirconate titanate, aluminum nitride, lithium tantalate, and lithium niobate. The piezoelectric layer 168 may be configured as a film to which compressive stress is applied. This allows the piezoelectric layer 168 to be deformed significantly.

In the example illustrated in FIG. 3, two piezoelectric elements 164 are respectively provided on the upper and lower surfaces of the leaf spring 162. Alternatively, only one piezoelectric element 164 may be provided on either surface of the leaf spring 162. Also, in the example illustrated in FIG. 3, the fixing member 165 is directly connected to the upper structure 110 of the bridge. However, this is only an example. Alternatively, any other member may be interposed between the upper structure 110 and the fixing member 165 as long as vibrations are transmissible from the upper structure 110 to the fixing member 165. Optionally, a case or any other protective member may be provided to enclose the vibration power generator.

In an alternative embodiment, the vibration sensor 151 may also be implemented as a vibration power generator in which the fixing member 165 is fixed to the upper structure 110 via a mass member 172 and an elastic member 173 as shown in FIG. 4. In FIG. 4, the mass member 172 serves as a case that houses the vibration system 161. The elastic member 173 may be made of an elastic material such as rubber, for example. Any other configuration may also be adopted as long as the vibration direction of a vibration system 171 comprised of the mass member 172 and the elastic member 173 agrees with the vibration direction of the vibration system 161. Note that agreement between vibration directions refers herein to agreement between the directions of major vibrations, regardless of the phases of the vibrations. As used herein, the "direction of major vibration" refers to a direction in which displacement becomes maximum. Also, the "agreement between directions" refers herein to a situation where the difference between two directions is within ±30°, suitably within ±20°, and more suitably within ±10°.

Implementing the vibration sensor 151 as a vibration power generator including two vibration systems in combination allows the vibration sensor 151 not only to generate power in response to vibrations falling within an even broader frequency range but also to augment the magnitude of the generated power as well. For example, setting the resonant frequencies of the vibration systems 161 and 171 to be 44.8 Hz and 45 Hz, respectively, will allow for generating a power of 100 µW or more (i.e., a power generated at a vibration acceleration of 0.1 G) within a frequency range of approximately 30 Hz-60 Hz. From the viewpoint of generating great power within a broad frequency range, the difference in resonant frequency between the vibration systems 161 and 171 is suitably ±15% or less, more suitably ±10% or less, and even more suitably ±5% or less, of the resonant frequency of the vibration system 171.

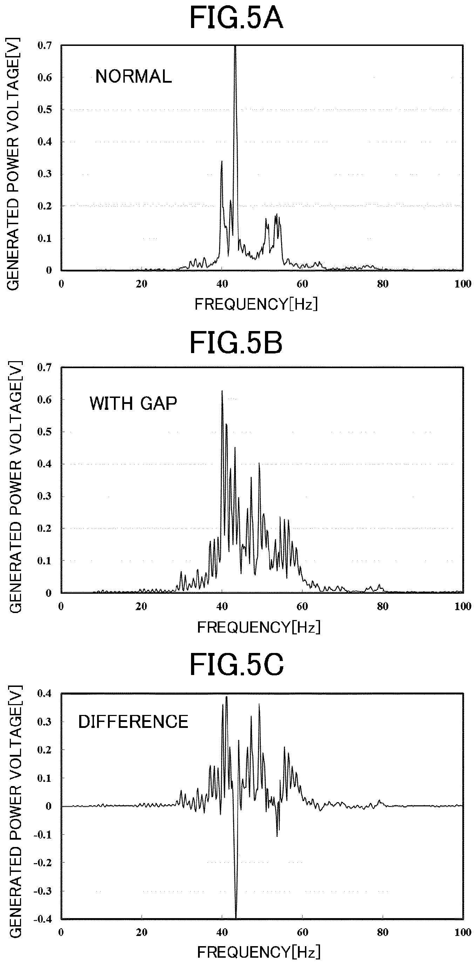

FIGS. 5A-5C each show a relationship between the distribution of vibration frequencies of the vibration sensor 151 that generates great power in the frequency range of approximately 30 Hz-60 Hz and the voltage of the power generated. FIG. 5A shows the results obtained when the vibration sensor 151 was arranged near a normal bearing. FIG. 5B shows the results obtained when the vibration sensor 151 was arranged near a bearing with a gap. FIG. 5C shows their difference, i.e., the result of subtraction of the spectrum shown in FIG. 5A from the spectrum shown in FIG. 5B. As shown in FIG. 5C, the vibration sensor 151 arranged near the bearing with a gap had a higher generated power voltage than the vibration sensor 151 arranged near the normal bearing within the frequency range of 30 Hz-60 Hz. Note that the generated power voltage was measured as a voltage between the terminals of a 100 kΩ resistor connected as a load to the vibration sensor 151.

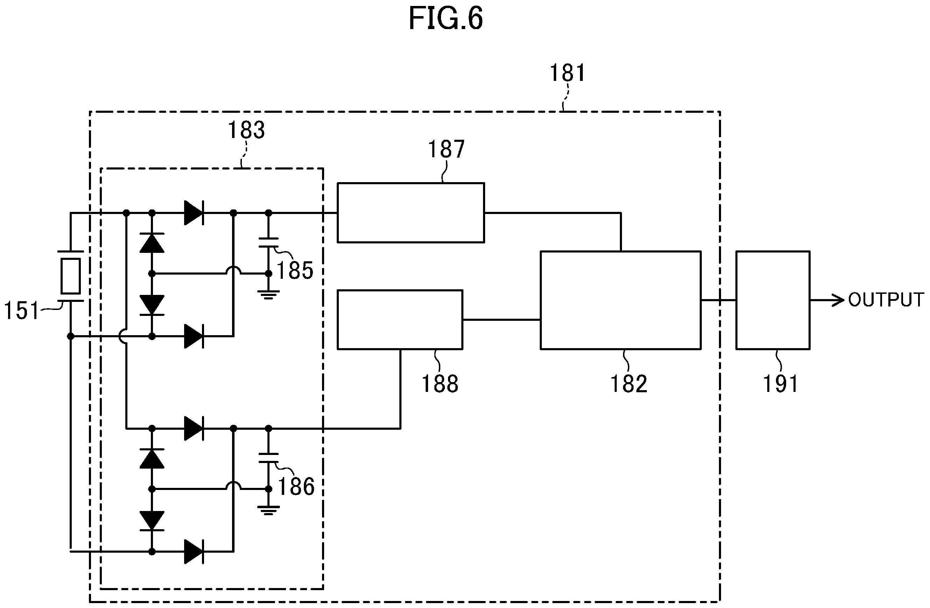

The detector circuit 181 may include, for example, an arithmetic circuit 182 for calculating the difference between respective outputs of the vibration sensors 151A and 151B and comparing the difference with a threshold value, and a charge circuit 183 for charging capacitors with the respective outputs of the vibration sensors 151A and 151B. The charge circuit 183 includes a first capacitor 185 and a second capacitor 186 as shown in FIG. 6, for example. The first capacitor 185 has a greater capacitance than the second capacitor 186 and stores power to drive the arithmetic circuit 182. The second capacitor 186 generates an input signal to be supplied to the arithmetic circuit 182. The capacitance of the second capacitor 186 may be approximately 1/1000 of that of the first capacitor 185. The charge circuit 183 with such a configuration can drive a microcomputer with low power consumption, for example.

The output of the first capacitor 185 may be converted by a DC-DC converter 187 into a drive voltage for the arithmetic circuit 182. The output of the second capacitor 186 may be supplied to the arithmetic circuit 182 through an analog-to-digital converter 188.

The arithmetic circuit 182 receives, as input values, the respective outputs of the vibration sensors 151A and 151B and calculates the difference between the two input values. Furthermore, if the difference between the input values is greater than a predetermined threshold value, the arithmetic circuit 182 outputs a damage detection signal. The threshold value may be determined, through preliminary measurement, for each bridge to be monitored on an individual basis. Optionally, the level of the structural damage may be determined to be any of multiple stages with multiple different threshold values set, and damage detection signals with multiple different levels may be output. Note that although FIG. 6 illustrates only one of the two vibration sensors 151, the output of the other vibration sensor 151 is also supplied to the arithmetic circuit 182 through a similar configuration.

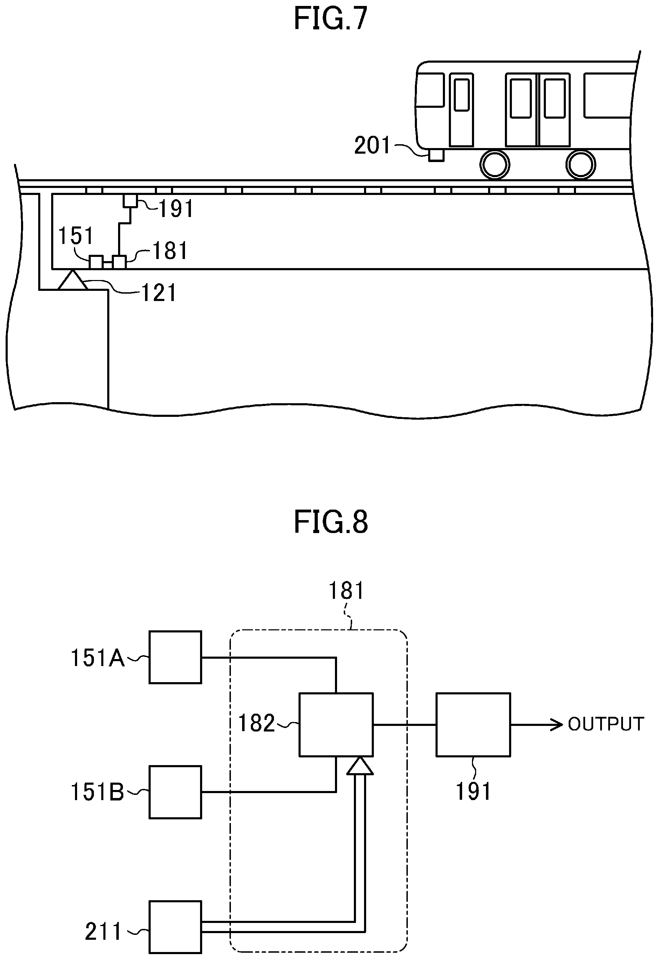

The damage detection signal output from the detector circuit 181 is converted by an output circuit 191 into an output recognizable from outside the bridge abnormality sensing device. The output circuit 191 may include a light-emitting device such as a light-emitting diode arranged beside a rail, for example. In that case, a surveillance device 201 such as a camera is installed on a train to constitute a system to see whether the light-emitting device has been turned ON when the train passes through the bridge as shown in FIG. 7. Keeping the light-emitting device, which has turned ON in response to any structural damage detected, in the ON state at least until the next train passes allows the vibration sensor 151 to detect the damage when the train passes over the sensor 151. The image shot by the camera may be analyzed either in real time or after having been stored once. Also, the light-emitting device may have the duration of its ON state adjusted arbitrarily depending on the operating status of the train to shoot the image.

To allow the user to easily locate the bridge abnormality sensing device in the ON state, the camera may be configured to capture an image of a location marker or may operate in conjunction with a global positioning system (GPS) as well. The light-emitting device does not have to be arranged beside a rail but may also be arranged at any other easily visually recognizable position as well. For example, in the case of an overpass, notification of detection of any structural damage may be sent by a rotating lamp or any other light-emitting device disposed at the bottom of a bridge abutment or a bridge pier.

Alternatively, this embodiment may also be implemented as a system in which the output circuit 191 serves as a wireless transmission circuit and the surveillance device 201 serves as a receiver mounted on a train. The output circuit 191 may transmit a signal with a low output level, as long as the transmitted signal is receivable at the passing train. Optionally, the output circuit 191 may be configured to transmit not only the damage detection signal but also the ID number of the bridge abnormality sensing device or any other piece of information simultaneously. Still alternatively, this embodiment may also be implemented as a system in which notification of detection of any structural damage is directly transmitted to a surveillance center, for example, as long as a sufficient quantity of power is able to be generated and as long as a high-output transmitter is usable. Yet alternatively, this embodiment may also be implemented as a system including a relay station or any other repeater to relay transmission from a surrounding bridge abnormality sensing device. This allows the bridge abnormality sensing device to remotely monitor the health of a given bridge to detect any abnormal vibrations thereof that could be generated.

If the detector circuit 181 outputs multi-stage damage detection signals with mutually different levels, then the output of the output circuit 191 may be changed accordingly. For example, the light-emitting device to be turned ON may have colors of its emission changed, or be flickered with the light-emitting period changed, according to the level of the damage detection signal.

In an alternative embodiment, the output circuit 191 may also be configured to be driven by a different power supply from the detector circuit's 181. Driving the output circuit 191 with a different power supply enables use of a circuit with high power consumption. The output circuit 191 may also be battery-powered because such an output circuit 191 may be arranged, away from the vibration sensor 151, at a location where the output circuit 191 is easily subjected to maintenance and inspection. Alternatively, the output circuit 191 may also be arranged at a location where a power supply line is already installed. Nevertheless, when the output circuit 191 is supplied with a sufficient quantity of power or has sufficiently small power consumption, the output circuit 191 may also be configured to be driven with the power supplied from the vibration sensor 151.

When arranged to be spaced apart from each other, the output circuit 191 and the detector circuit 181 may be connected together either via a cable or wirelessly.

The detector circuit 181 may also be configured to store the difference between the two input signals with time, and output the damage detection signal when a change with time in the difference between the input signals exceeds a threshold value. Alternatively, the detector circuit 181 may also be configured to output a different damage detection signal when the difference between two input signals exceeds a threshold value from when the change with time exceeds a threshold value. Even when a determination is made based on the change with time, the level of the structural damage may be determined to be any of multiple stages with threshold values set in multiple stages.

Alternatively, the system may also be configured in which the detector circuit 181 outputs a value representing the difference between the two input signals and the output circuit 191 stores the difference between the input signals with time.

In the embodiment described above, the detector circuit 181 is driven with the output of the vibration sensor 151. In an alternative embodiment, a power-supplying vibration power generator 211 for generating power to drive the detector circuit 181 may be provided separately from the vibration sensor 151 as shown in FIG. 8. The power-supplying vibration power generator 211 may have the same configuration as the vibration sensor 151. Or the power-supplying vibration power generator 211 may also be configured to generate power under the vibrations of the bridge in a normal frequency range, unlike the vibration sensor 151. Even if well-balanced loads are applied to the respective bearings 121, a railroad bridge will also vibrate when a train passes through itself. Such vibrations are produced mainly in the frequency range of approximately 400 Hz-800 Hz. Setting the power generation frequency range of the power-supplying vibration power generator 211 to be such a frequency range allows the vibration power generator 211 to provide a stable supply of power. If a sufficient quantity of power is obtained, the power to drive the output circuit 191 may also be supplied from the power-supplying vibration power generator 211.

In the embodiment described above, the two vibration sensors 151 work as a pair. Depending on the structure or any other parameter of a given bridge, however, the system may also be configured such that three or more vibration sensors 151 work in tandem. For example, if three vibration sensors 151 work in tandem, the system may also be configured to calculate the difference between the output of the central one of the three vibration sensors 151 and the outputs of the other two vibration sensors 151 on both ends.

In a railroad bridge including three or more bearings 121 arranged in a width direction, the vibration sensor 151 may be arranged on either each of the bearings 121 or only some of the bearings 121. Also, in the case of a railroad bridge including bridge piers between bridge abutments and multiple sets of bearings 121 arranged in the length direction, a bridge pier abnormality sensing device may be provided to monitor the health of either all, or only a particular one, of those sets of bearings 121.

### INDUSTRIAL APPLICABILITY

A bridge abnormality sensing device according to the present disclosure is useful, for example, as a sensing device for monitoring the health of a given railroad bridge to detect any abnormal vibrations thereof effectively without using batteries or power cables.

### DESCRIPTION OF REFERENCE CHARACTERS

- 110: Upper Structure
- 120: Bridge Abutment
- 121: Bearing
- 121A: Bearing
- 121B: Bearing
- 151: Vibration Sensor
- 151A: Vibration Sensor
- 151B: Vibration Sensor
- 161: Vibration System
- 162: Leaf Spring
- 163: Mass Member
- 164: Piezoelectric Element
- 165: Fixing Member
- 167: Upper Electrode
- 167A: Cable
- 168: Piezoelectric Layer
- 169: Lower Electrode
- 169A: Cable
- 171: Vibration System
- 172: Mass Member
- 173: Elastic Member
- 180: Load
- 181: Detector Circuit
- 182: Arithmetic Circuit
- 183: Charge Circuit
- 185: First Capacitor
- 186: Second Capacitor
- 187: DC-DC Converter
- 188: Analog-to-Digital Converter
- 191: Output Circuit
- 201: Surveillance Device
- 211: Power-Supplying Vibration Power Generator

## Claims

1. A bridge abnormality sensing device comprising:
a pair of vibration sensors installed in an upper structure of a railroad bridge supported with a plurality of bearings, the pair of vibration sensors being provided for two of the bearings arranged in a width direction;
a detector circuit configured to output a damage detection signal based on a difference between output signals of the pair of vibration sensors; and
an output circuit configured to receive the damage detection signal and notify an external device of any structural damage detected from the railroad bridge, wherein
the vibration sensors are vibration power generators that generate power in a frequency range of abnormal vibration resulting from the damage, and
power to drive the detector circuit is supplied from the vibration power generators.

2. The bridge abnormality sensing device of claim 1, wherein
the detector circuit includes a first capacitor and a second capacitor to be charged with outputs of the vibration sensors, and an arithmetic circuit configured to calculate the difference between the output signals,
the first capacitor stores power to drive the arithmetic circuit, and
the second capacitor generates an input signal to be supplied to the arithmetic circuit.

3. A bridge abnormality sensing device comprising:
a pair of vibration sensors installed in an upper structure of a railroad bridge supported with a plurality of bearings, the pair of vibration sensors being provided for two of the bearings arranged in a width direction;
a detector circuit configured to output a damage detection signal based on a difference between output signals of the pair of vibration sensors; and
an output circuit configured to receive the damage detection signal and notify an external device of any structural damage detected from the railroad bridge; and
a power-supplying vibration power generator installed in the upper structure of the railroad bridge and configured to supply power to drive the detector circuit, wherein
the vibration sensors are vibration power generators that generate power in a frequency range of abnormal vibration resulting from the damage.

4. The bridge abnormality sensing device of any one of claims 1-3, wherein
each said vibration power generator comprises: a first vibration system including a leaf spring forming an integral part of a piezoelectric element and a first mass member attached to the leaf spring; and a second vibration system including a second mass member, to which the first vibration system is attached, and an elastic member provided between the second mass member and the upper structure, and
a resonant frequency of the first vibration system and a resonant frequency of the second vibration system fall within a frequency range of the abnormal vibration.

5. The bridge abnormality sensing device of any one of claims 1-4, wherein
the detector circuit stores the difference between the output signals with time, and outputs the damage detection signal when a change with time in the difference between the output signals exceeds a predetermined rate of change.

6. The bridge abnormality sensing device of any one of claims 1-5, wherein the detector circuit and the output circuit are wirelessly connected to each other.

7. The bridge abnormality sensing device of any one of claims 1-6, wherein
the output circuit includes a light-emitting device arranged at such a position where an image of the light-emitting device is captured by a camera mounted on a running train and configured to emit light in response to the damage detection signal.

8. The bridge abnormality sensing device of any one of claims 1-6, wherein
the output circuit includes a wireless communications circuit.

9. A bridge health monitoring system comprising:
a bridge abnormality sensing device configured to detect any structural damage done to a railroad bridge; and
a surveillance device mounted on a train to run through the railroad bridge and configured to monitor behavior of the bridge abnormality sensing device, wherein
the bridge abnormality sensing device includes: a pair of vibration sensors installed in an upper structure of the railroad bridge supported with a plurality of bearings, the pair of vibration sensors being provided for two of the bearings arranged in a width direction; a detector circuit configured to output a damage detection signal based on a difference between output signals of the pair of vibration sensors; and an output circuit configured to receive the damage detection signal and notify an external device of the damage,
the vibration sensors are vibration power generators that generate power in a frequency range of abnormal vibration resulting from the damage, and
power to drive the detector circuit is supplied from the vibration power generators.

10. The bridge health monitoring system of claim 9, wherein
the output circuit makes the light-emitting device emit light in the event of the damage detected, and
the surveillance device is a camera mounted on the train to see whether or not the light-emitting device is emitting light.

11. A bridge damage detection method comprising:
calculating a difference between outputs of a pair of vibration sensors installed in an upper structure of a railroad bridge supported with a plurality of bearings, the pair of vibration sensors being provided for two of the bearings arranged in a width direction; and determining, based on the magnitude of the difference, whether or not any structural damage has been done.

12. A bridge damage detection method comprising:
calculating a change with time in a difference between outputs of a pair of vibration sensors installed in an upper structure of a railroad bridge supported with a plurality of bearings, the pair of vibration sensors being provided for two of the bearings arranged in a width direction; and determining, based on a value of the change with time, whether or not any structural damage has been done.
